Europäisches Patentamt

(19) European Patent Office

Office européen des brevets

(11) Publication number: **0 335 829 B1**

# (12) EUROPEAN PATENT SPECIFICATION

(45) Date of publication of patent specification:
18.12.91 Bulletin 91/51

(51) Int. Cl.⁵: **B62L 1/12**

(21) Application number: **89810140.7**

(22) Date of filing: **22.02.89**

(54) **Bicycle caliper brake assembly.**

(30) Priority: **31.03.88 JP 44416/88**

(43) Date of publication of application:
**04.10.89 Bulletin 89/40**

(45) Publication of the grant of the patent:
**18.12.91 Bulletin 91/51**

(84) Designated Contracting States:
**CH DE ES FR GB IT LI**

(56) References cited:
**FR-A- 1 019 440**
**FR-A- 1 143 998**
**JP-A- 6 283 290**
**JP-U-60 136 283**

(73) Proprietor: **MAEDA INDUSTRIES, LTD.**
**97, Tannan Mihara-cho**
**Minamikawachi-gun Osaka (JP)**

(72) Inventor: **Ishibashi, Yasunori**
**c/o Maeda Indutries, Ltd. 97, Tannan,**
**Mihara-cho**
**Minamikawachi-gun Osaka (JP)**

(74) Representative: **Baggiolini, Raimondo et al**
**Patent Attorneys**
**Fiammenghi-Fiammenghi-Racheli Via San**
**Gottardo 15**
**CH-6900 Lugano (CH)**

EP 0 335 829 B1

## Description

This invention relates to a bicycle caliper brake assembly, and more particularly to a caliper brake assembly of the type which has a completely concealed return spring system to prevent rusting, by the rain water, of the spring system in addition to providing attractive appearance and improved aerodynamic characteristics.

As is well known, a side-pull type caliper brake assembly, which is most commonly used in existing bicycles, comprises a pair of brake calipers pivotally supported on a support shaft and always urged by a return spring to pivot away from each other. Each caliper has a shoe mounting portion and a cable connecting portion. The shoe mounting portion of one caliper is made to engage, from below, with the cable connecting portion of the other caliper, so that the pair of calipers are prevented from excessively pivoting away from each other under the action of the return spring which has been pre-energized or pre-torsioned.

Conventionally, the return spring is exposed to the exterior, so that it is subjected to the adverse influences of the rain water, mud, dust, and so on. Further, the exposed return spring deteriorates the visual attractiveness and aerodynamic characteristics of the overall brake assembly.

In order to avoid these drawbacks of the exposed return spring, Japanese Utility Model Application Laid-open No. 60-136283 (Laid-open : September 10, 1985 ; Appln. No. 59-24698 ; Filed : February 22, 1984 ; Applicant : Shimano Industrial Co. Ltd. ; Inventor : Masashi NAGANO) proposes an improved caliper brake assembly employing a completely concealed or enclosed return spring system. More specifically, the brake assembly of this laid-open application comprises a first and a second calipers respectively having bosses rotatably fitted on a support shaft as interposed between an intermediate flange of the shaft and a double nut adjustably screwed on the shaft. An engaging disk is non-rotatably fitted on the support shaft between the respective bosses of the two calipers. Both calipers are biased to pivot away from each other by a first and a second coil springs respectively accommodated within the respective bosses of the first and second calipers. The second spring has one end directly engaging the boss of the second caliper and the other end caught by the engaging disk. Thus, the second caliper is always under the influence of the second spring. The brake assembly further includes an operating member which is especially provided for initial energization of the first spring.

The operating member comprises a headed sleeve rotatably fitted on the support shaft and rotatably penetrating through the boss of the first caliper to project outward therefrom toward the intermediate flange of the support shaft with the head of the sleeve positioned within the first caliper boss. The operating member further includes a lever co-rotatably fitted on the projecting end of the sleeve. The first spring has one end engaging the head of the sleeve and the other end arrested by the engaging disk. The lever of the operating member is forcibly pivoted to initially torsion the first spring and subsequently bolted to a predetermined portion of the first caliper boss to bring the first caliper under the influence of the first spring.

The above prior art brake assembly requires the specially devised operating member for initial energization or pre-torsioning of the first spring after mounting of the two calipers onto the support shaft. Naturally, the operating member is an additional component which is used only for initial energization of the first spring but cannot be removed even after such energization, consequently complicating the overall structure of the assembly. Further, subsequent bolting, to the first caliper boss, of the lever of the operating member necessitates exact positional adjustment between the lever and the boss and thereby requires a lot of skill.

Japanese Patent Application Laid-open No. 62-83290 (Laid-open : April 16, 1987 ; Application No. : 60-222489 ; Filed : October 5, 1985 ; Applicant : Maeda Industries, Ltd. ; Inventor : Mikio HOSOKAWA) discloses a simplified bicycle caliper brake assembly wherein no additional operating member is used. Specifically, the brake assembly comprises a pair of calipers respectively having bosses rotatably fitted on a support shaft, a pair of coil springs respectively accommodated within the bosses of the two calipers, and a pair of separate engaging disks interposed between the caliper bosses. Each spring has an inner end engaging with a corresponding engaging disk and an outer end engaging with the boss of a corresponding caliper. Each engaging disk is non-rotatable relative to the support shaft but axially movable separately from the other engaging disk. Thus, it is possible to maintain engagement of each coil spring with the corresponding caliper boss as well as with the corresponding engaging disk even if the axial distance between the two caliper bosses are increased enough to enable pivotal movement of the two calipers without any interference therebetween (namely without engagement between the shoe mounting portion of one caliper and the cable connecting portion of the other caliper). In other words, the two calipers can take their axially separated position (preassembled position) on the support shaft for initial energization of the respective coil springs by the pivotal movement of the two calipers toward each other, and thereafter assume their final axial position (assembled position) in which the shoe mounting portion of one caliper comes into engagement the cable connecting portion of the other caliper under the action of the thus pre-torsioned springs.

The above brake assembly is much simpler in structure than the brake assembly discussed previously, and enables a relatively easy operation for pretorsioning of the coil springs. However, the necessity of axially moving the calipers after or during pre-torsioning of the springs should be obviated to provide an even easier assembling operation.

A caliper brake with concealed springs is also known from FR-A-1143998.

It is, therefore, an object of the present invention to provide a bicycle caliper brake assembly which, while it may employ a completely concealed or enclosed return spring system, is very simple in configuration but yet enables facilitated initial energization of the spring system.

According to the present invention, there is provided a bicycle caliper brake assembly comprising : a first and a second calipers respectively having bosses rotatably fitted on a support shaft axially one behind the other so that said calipers are pivotally movable so that the brakes are movable toward and away from each other, said calipers coming into engagement with each other to limit pivotal movement of the brakes away from each other, said bosses defining respective annular spaces ; and a spring system for urging said brakes pivotally away from each other, said spring system including a first coil spring received in the annular space of said first caliper and having one end in engagement with the corresponding boss, and a second coil spring received in the annular space of the second caliper and having one end in engagement with the corresponding boss ; characterized in that each of said annular spaces opens axially outward ; that a first engaging member is fixed on said support shaft axially outwardly of said first caliper in facing relation to the boss thereof, said first engaging member being engageable with the other end of said first coil spring ; and that a second engaging member is removably mounted on said support shaft axially outwardly of said second caliper in facing relation to the boss thereof, said second engaging member being rotationally fixable relative to said support shaft for engagement with the other end of said second coil spring at a predetermined position.

The initial energization of the coil springs incorporated in the above arrangement are carried out in a very simple manner, as hereinafter described. It suffices now to mention that no special device for initial energization of the springs is called for, thereby contributing greatly to simplification and compactness of the overall assembly.

According to one embodiment of the invention, the support shaft has a non-circular portion, and the second engaging member is in the form of a discal plate having a non-circular central opening for non-rotatably fitting on the non-circular portion of the support shaft. This arrangement is advantageous in producing standardized brake assembly in which initial energization of the return spring system is set at a fixed value.

According to another embodiment of the invention, the support shaft has an externally splined portion, and the the second engaging member is in the form of a discal plate having an internally splined central opening for non-rotatably fitting on the externally splined portion of the support shaft at a selected rotational position. This arrangement makes it possible to adjust the degree of initial energization of the return spring system depending on the taste of a particular rider.

The invention will now be described further, by way of example only, with reference to the accompanying drawings, in which :

Figure 1 is a perspective view showing the entirety of a caliper brake assembly embodying the invention ;
Figure 2 is a slightly enlarged view in section taken on lines II-II in Figure 1 ;
Figure 3 is a sectional view similar to Figure 2 but showing the brake assembly with its return spring system removed ;
Figures 4a to 4c are explanatory illustrations as viewed in the direction of an arrow IV in Figure 1 to show successive stages of pre-torsioning operation of the return spring system ; and
Figure 5 is a front view showing a second engaging plate.

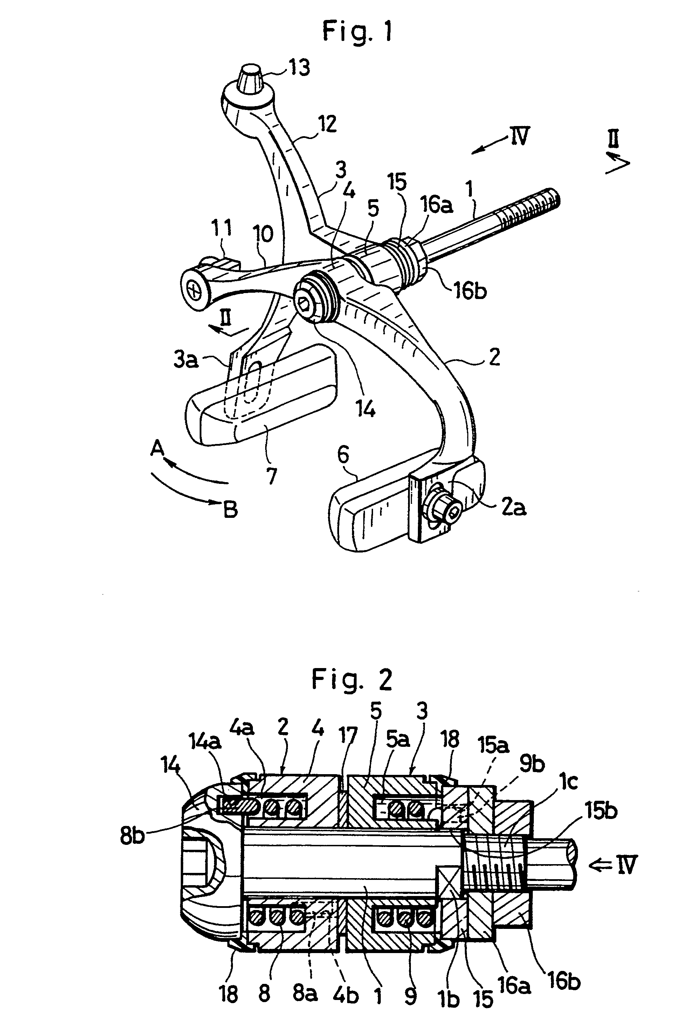

Referring now to Figure 1 of the accompanying drawings, a caliper brake assembly according to the present invention has a pair of brake calipers which are pivotally mounted on a common support shaft 1. These calipers are hereinafter referred to respectively as first caliper 2 and second caliper 3 when distinction between the two is required. The calipers 2, 3 respectively have bosses 4, 5 which are rotatably fitted on the support shaft 1 one behind the other. The calipers 2, 3 extend downward from the respective bosses 4, 5 in a curved fashion on both sides of the support shaft 1, so that they partially surround a cross section of a bicycle wheel tire (not shown).

The first caliper 2 is formed at its lower free end with shoe support portion 2a on which is mounted an inwardly directed brake shoe 6. The first caliper 2 further has an integral cable connecting portion 10 extending downward from the boss 4 on the side of the support shaft 1 opposite the shoe support portion 2a. The free end of the connecting portion 10 is connected to an inner cable of a known double type control cable (not shown) by means of a connector 11.

The second caliper 3 is also formed at its lower free end with a shoe support portion 3a on which is mounted an inwardly directed brake shoe 7 in opposed relation to the other brake shoe 6. The second caliper 3 is further formed at an intermediate portion thereof with an integral cable connecting portion 12 which extends obliquely upward. The upper free end of the connecting portion 12 is provided with a connector 13 for connection to an outer cable or sheath of the unillustrated double type control cable.

The support shaft 1 has a threaded end section 1a which, in combination with an unillustrated nut, is used for mounting to a suitable part (e.g. fork crown or connecting rod extending between a pair of fork stay tubes) of an unillustrated bicycle frame.

Both calipers 2, 3 are always urged away from each other by a return spring system which is rendered invisible by being incorporated within their respective bosses 4, 5, as hereinafter described.

In the non-braking position, the shoe support portion 3a of the second caliper 3 engages the underside of the cable connecting portion 10 of the first caliper 2 under the biasing force of the return spring system to prevent further expansion of the calipers 2, 3. In other words, the shoe support portion 3a of the second caliper 3 also serves as a stopper which holds the respective brake shoes 6, 7 at a predetermined small distance from a bicycle wheel rim (not shown) to ensure a quick response upon a braking operation.

When an unillustrated remote control lever is operated to pull up the inner cable of the unillustrated double type control cable, the distance between the the cable connecting portions 10, 12 of the respective calipers 2, 3 is forcibly reduced to bring the brake shoes 6, 7 toward each other into braking contact with the unillustrated wheel rim.

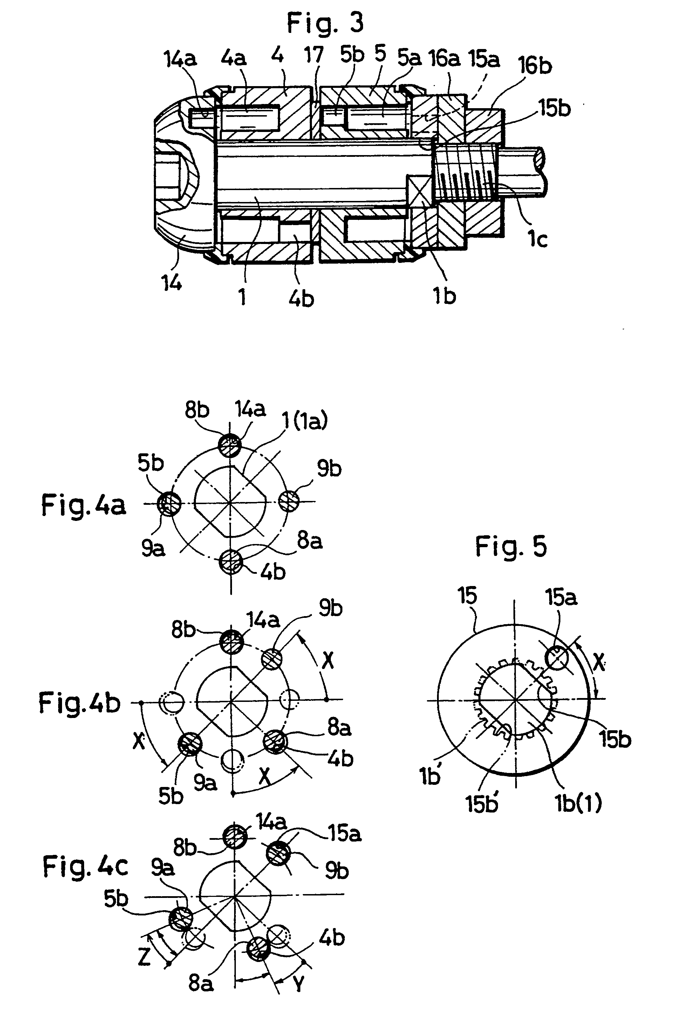

As illustrated in Figures 2 and 3, an annular thrust washer 17 is interposed between the respective bosses 4, 5 of the two calipers 2, 3 to reduce the rotational friction therebetween. If required, the thrust washer may be replaced by a thrust ball bearing to provide an even reduced friction.

The bosses 4, 5 respectively defines bottomed annular spaces 4a, 5a which extend and open axially outwardly. These annular spaces 4a, 5a accommodate the return spring system provided by a first coil spring 8 and a second coil spring 9. The first spring 8 has an axially extending inner end 8a engaging in an axially extending engaging bore 4b formed in the bottom of the annular space 4a. Similarly, the second spring 9 has an axially extending inner end 9a (see Figure 4a) engaging in an axially extending engaging bore 5b (see Figure 3) formed in the bottom of the other annular space 5a. It should be appreciated in this connection that Figure 2 shows the bosses 4, 5 in their completely assembled rotational position, whereas Figure 3 shows these bosses in slightly displaced rotational position for the purpose of clearer illustration of the engaging bores 4b, 5b.

At the end of the support shaft 1 opposite the threaded end section 1a (see Figure 1), there is provided a first engaging member 14 which, according to the illustrated embodiment, is in the form of an enlarged integral head of of the support shaft 1. The engaging member 14 is formed with an axially extending engaging bore 14a. The boss 4 of the first caliper 2 is positioned in facing relation to the first engaging member 14. The first spring 8 has an axially extending outer end 8b engaging in the engaging bore 14a of the first engaging member 14.

On the other hand, a second engaging member 15, which is in the form of a discal plate according to the illustrated embodiment, is removably fixed on the support shaft 1 at a position axially outwardly of the boss 5 of the second caliper 3. For this purpose, the support shaft 1 has a non-circular intermediate portion 1b (see Figure 5), while the second engaging member 15 has a correspondingly non-circular central opening 15b for non-rotatably fitting on the non-circular portion 1b of the support shaft 1. The second engaging member 15 further has an axially extending engaging bore 15a at a position radially deviated from the central opening 15b. The second coil spring 9 has an axially extending outer end 9b engaging in the engaging bore 15a of the second engaging member 15.

The support shaft 1 further has a threaded intermediate portion 1c for engagement with a double lock nut provided by two nut bodies 16a, 16b. When the double lock nut is tightened up, the second engaging member 15 is prevented from moving axially.

According to the illustrated embodiment, an annular seal member 18 is interposed between each engaging member 14, 15 and a corresponding boss 2, 3 to prevent entry of rain water or dust into the annular space 4a, 5a. If required, the annular space 4a, 5a may be filled with grease to ensure smooth pivotal movement of the caliper 2, 3.

Assembling of the caliper brake thus constructed and initial energizing or pre-torsioning of the two springs 8, 9 are conducted in the following manner. For the convenience of explanation, the reference to mounting of the seal members 18 will be purposely omitted in the following description.

The support shaft 1 is held fixed as by a vise nipping the first engaging member 14. Then, the first caliper 2, the thrust washer 17, and the second caliper 3 are successively fitted onto the support shaft 1 from the side of the threaded end section 1a thereof. In so doing, the first spring 8 is loaded into the annular space 4a of the first caliper boss 4 so that its both ends 8a, 8b are appropriately engaged with the first caliper boss 4 and the first engaging member 14 (as shown in Figure 2), whereas the second spring 9 is loaded into the annular space 5a of the second caliper boss 5 with only its inner end 9a (see Figure 4a) engaged with the engaging bore 5b of the second caliper boss 5. Further, the bosses 4, 5 of the two calipers substantially assume their final assembled axial position, so that the shoe mounting portion 3a (see Figure 1) of the second caliper 3 is engageable with the cable connecting portion 10 of the first caliper 2.

Figure 4a illustrates the respective engaging ends 8a, 8b, 9a, 9b of the first and second coil springs 8, 9 in their natural state, i.e., immediately before pre-torsioning thereof. As appreciated, the inner and outer ends 8a, 8b of the first spring 8 are shown to be positioned diametrically opposite. Similarly, the inner and outer ends 9a, 9b of the second coil spring 9 are also shown to be located diametrically opposite.

With the shoe mounting portion 3a of the second caliper 3 engaging the cable connecting portion 10 of the first caliper, the second caliper 3 together with the first caliper 2 is pivoted manually in the direction of an arrow A in Figure 1. The pivotal movement of the first caliper 2 causes the inner end 8a of the first spring 8 engaging the first caliper boss 4 to move along a circular path through an angle X for example, while the outer end 8b of the first spring 8 engaging the fixed first engaging member 14 remains in the same position. As a result, the first spring 8 is torsioned to the degree corresponding to the angle X, as shown in Figure 4b. The pivotal movement of the second caliper 3, on the other hand, causes both ends 9a, 9b of the second coil spring 9 to move along a circular path through the angle X because the outer end 9b is still kept free. As a result, the relative position between both ends 9a, 9b of the second coil spring 9 is retained without torsioning thereof, as illustrated in Figure 4b.

While manually retaining the two calipers 2, 3 in this pivotal position, the second engaging member 15 is fitted onto the non-circular portion 1a of the support shaft, which results in that the outer end 9b of the second spring 9 engages in the engaging bore 15a of the second engaging member 15. If required, the pivotal position of the second caliper 2 may be easily adjusted so that the outer end 9b of the second spring 9 coincides in angular position with the engaging bore 15a of the second engaging member 15 (see Figures 4b and 5).

Finally, the two calipers 2, 3 are freed or liberated from a manual retaining force, and the double lock nut 16a, 16b is screwed onto the threaded intermediate portion 1c of the support shaft 1, as illustrated in Figure 2. As a result, the two calipers 2, 3 are held interposed between the first and second engaging members 14, 15 as prevented from axial displacement. Further, the liberation of the calipers 2, 3 leads to consequential pre-torsioning of the second spring 9.

More specifically, the first coil spring 8, which has been already torsioned, causes the first caliper 2 to pivot in the direction of an arrow B in Figure 1. Such returning pivotal movement of the first caliper 2 also causes the second caliper 3 to pivot in the same direction because of engagement between the shoe mounting portion 3a of the second caliper 3 and the cable connecting portion 10 of the first caliper 2. This time, however, since the outer end 9b of the second spring 9 engages in the engaging bore 15a of the second engaging member 15 which has been fixed, the returning pivotal movement of the second caliper 3 results in torsioning of the second spring 9. Thus, the first caliper 2 returns incompletely to a pivotal position where the forces of the two springs 8, 9 are balanced. Such a balanced condition is represented in Figure 4c in which the first and second springs 8, 9 are shown to be pre-torsioned by respective angles Y, Z. These torsioning angles Y, Z become equal when the two springs 8, 9 are equivalent in biasing capacity.

According to the invention, the first coil spring 8 may be initially torsioned to a higher degree than is required for normal pre-torsioning, and such additional torsioning of the first spring 8 is utilized for pre-torsioning of the second coil spring 9. Further, this pre-torsioning of the second spring 9 is in turn utilized for preventing the first spring 8 from returning to its natural state, namely for maintaining the first spring 8 in its normally pre-torsioned state.

If required, the support shaft 1 may have an externally splined portion 1b' for non-rotatable engagement with the second engaging member 15 which has a correspondingly splined central opening 15b', as indicated in phantom lines in Figure 5. Such a modification is advantageous in that the two springs 8, 9 can be pre-torsioned to any desired degree depending on the rider's liking or requirements, and in that it becomes easier to align the outer end 9b of the second spring 9 with the engaging bore 15a of the second engaging member 15.

Obviously, the two springs 8, 9 can be pre-torsioned in an extremely simplified manner without requiring subsequent axial displacement of the calipers 2, 3 as opposed to the disclosure of Japanese Patent Application Laid-open No. 62-83290 previously discussed. Further, the calipers 2, 3 themselves are used as levers for pre-torsioning, thereby obviating a separate lever assigned only for the pre-torsioning purpose as opposed to Japanese Utility Model Application Laid-open No. 60-136283 also discussed previously. Therefore, the overall brake assembly is very simple in structure and very compact.

With the thus completed caliper brake assembly, the first and second calipers 2, 3 are pivotally forced away from each other respectively by the restoring force of the first and second springs 8, 9 but prevented from pivoting past their non-braking position by the engagement between the shoe support portion 3a of the second caliper 3 and the cable connecting portion 10 of the first caliper 2.

The return springs 8, 9 are entirely housed within the corresponding annular spaces 4a, 5a of the caliper bosses 4, 5, so that they are prevented from rusting by contact with the rain water. Further, complete enclosure of the springs 8, 9 within the bosses 4, 5 not only provides a visually attractive appearance but also improves aerodynamic characteristics of the brake assembly.

It is obvious that the invention may be varied in many ways. For instance, the first engaging member 14 may be separate from and removably fixable onto the support shaft 1. Further, the positional relation between the first and second engaging members 14, 15 may be reversed with corresponding rearrangement of the related parts. Such variations are not to be regarded as a departure from the scope of the invention, and all such modifications as would be obvious to those skilled in the art are intended to be included within the scope of the invention as defined in the appended claims.

## Claims

1. A bicycle caliper brake assembly comprising : a first and a second calipers respectively having bosses rotatably fitted on a support shaft axially one behind the other so that said calipers are pivotally movable so that the brakes are movable toward and away from each other, said calipers coming into engagement with each other to limit pivotal movement of the brakes away from each other, said bosses defining respective annular spaces ; and a spring system for urging said brakes pivotally away from each other, said spring system including a first coil spring received in the annular space of said first caliper and having one end in engagement with the corresponding boss, and a second coil spring received in the annular space of said second caliper and having one end in engagement with the corresponding boss ; characterized in that each of said annular spaces (4a, 5a) opens axially outward ; that a first engaging member (14) is fixed on said support shaft (1) axially outwardly of said first caliper (2) in facing relation to the boss (4) thereof, said first engaging member being engageable with the other end (8b) of said first coil spring (8) ; and that a second engaging member (15) is removably mounted on said support shaft axially outwardly of said second caliper (3) in facing relation to the boss (5) thereof, said second engaging member being rotationally fixable relative to said support shaft for engagement with the other end (9b) of said second coil spring (9) at a predetermined position.

2. The brake assembly according to claim 1, wherein said support shaft (1) has a non-circular portion (1b), and said second engaging member (15) is in the form of a discal plate having a non-circular central opening (15b) for non-rotatably fitting on said non-circular portion of said support shaft.

3. The brake assembly according to claim 1, wherein said support shaft (1) has an externally splined portion (1b'), said second engaging member (15) is in the form of a discal plate having an internally splined central opening (15b') for non-rotatably fitting on said externally splined portion of said support shaft at a selected rotational position.

4. The brake assembly according to claim 2 or 3, wherein said second engaging member (15) is axially held in position by locking means (16a, 16b) screwably fitting on said support shaft (1) at a position axially outwardly of said second engaging member.

5. The brake assembly according to claim 4, wherein said locking means comprises a double lock nut (16a, 16b).

6. The brake assembly according to any one of claims 1 to 5, wherein an annular sealing member (18) is interposed between each of said bosses (4, 5) and a corresponding one of said first and second engaging members (14, 15).

7. The brake assembly according to any one of claims 1 to 6, wherein a thrust washer (17) is interposed between said bosses (4, 5).

8. The brake assembly according to any one of claims 1 to 7, wherein said one end (8a, 9a) of each coil spring (8, 9) extends axially for fitting in an axially extending engaging bore (4b, 5b) of a corresponding boss (4, 5), and said other end (8b, 9b) of said each coil spring also extends axially for fitting in an axially extending engaging bore (14a, 15a) of a corresponding engaging member (14, 15).

9. The brake assembly according to any one of claims 1 to 8, wherein said first engaging member (14) is integral with said support shaft (1).

10. The brake assembly according to any one of claims 1 to 8, wherein said first engaging member (14) is separate from said support shaft (1).

## Revendications

1. Assemblage de freins de bicyclette à mâchoires composé : d'une première et d'une seconde mâchoires possédant chacune un manchon permettant de les emmancher l'une derrière l'autre sur un axe de support, de telle façon que le mouvement de rotation desdites mâchoires soit libre autour de l'axe et que les freins puissent se rapprocher et s'écarter l'un de l'autre, les dites mâchoires étant engagées l'une avec l'autre de façon à limiter le mouvement de rotation par lequel les freins s'écartent l'un de l'autre, un espace annulaire étant ménagé à l'intérieur de chacun des manchons ; et un système de ressorts sollicitant les dits freins de façon à les écarter l'un de l'autre, le dit système de ressorts comprenant un premier ressort en spirale logé dans l'espace annulaire de la susdite première mâchoire et ayant une extrémité engagée dans le manchon correspondant ; caractérisé par le fait que chacun des espaces annulaires (4a et 5a) est axialement ouvert vers l'extérieur; qu'une première pièce d'engagement (14) est fixée, axialement vers l'extérieur de la susdite première mâchoire (2), sur le susdit axe de support (1), de manière à se trouver exactement en face du manchon (4) de cette mâchoire, l'autre extrémité (3b) du susdit premier ressort en spirale (8) pouvant s'engager dans la susdite première pièce d'engagement ; et qu'une deuxième pièce d'engagement (15) peut être montée et démontée, axialement vers l'extérieur de la susdite second mâchoire (3), de façon à se trouver exactement en face du manchon (5) de cette mâchoire, la susdite seconde pièce d'engagement pouvant être fixée, en la faisant tourner convenablement, sur le susdit axe de support, de façon y engager, dans une position déterminée à l'avance, l'autre extrémité (9b) du second ressort en spirale (9).

2. Un assemblage de freins conforme à la revendication 1, dans lequel l'axe de support (1) présente une partie non circulaire (1b), et la susdite deuxième pièce d'engagement (15) ayant la forme d'un disque plat présentant une ouverture centrale non circulaire (15b) pour un ajustage non rotatif sur la partie non circulaire dudit axe support.

3. Un assemblage de freins conforme à la revendication 1, dans lequel le susdit axe de support (1) présente une partie extérieurement cannelée (1b'), ladite deuxième pièce d'engagement (15) ayant la forme d'un disque plat présentant une ouverture centrale cannelée intérieurement (15b'), pour s'ajuster de façon non rotative sur la susdite partie extérieurement cannelée du susdit axe de support, dans une position de rotation déterminée.

4. Un assemblage de freins conforme aux revendications 2 ou 3, dans lequel la deuxième pièce d'engagement (15) est immobilisée axialement en position par des moyens de verrouillage (16a, 16b) pouvant se fixer par vissage sur le susdit axe de support (1), dans une position axialement située vers l'extérieur par rapport à la deuxième pièce d'engagement.

5. Un assemblage de freins conforme à la revendication 4, dans lequel les moyens de verrouillage sont constitués par un double boulon de verrouillage (16a, 16b).

6. Un assemblage de freins conforme à l'une quelconque des revendications 1 à 5, dans lequel une pièce annulaire d'étanchéité (18) est intercalée entre chacun des susdits manchons (4, 5) et l'une des première et deuxième pièces d'engagement (14, 15) correspondante.

7. Un assemblage de freins conforme à l'une quelconque des revendications 1 à 6, dans lequel une rondelle de butée (17) est intercalée entre les susdits manchons (4, 5).

8. Un assemblage de freins conforme à l'une quelconque des revendications 1 à 7, dans lequel, une extrémité (8a, 9a) de chacun des ressorts en spirale (8, 9) s'étend axialement pour s'ajuster dans un trou d'engagement s'étendant axialement (4b, 5b) et ménagé dans un manchon correspondant (4, 5), et l'autre extrémité (8b, 9b) de chacun desdits ressorts en spirale s'étend également axialement pour pouvoir s'engager dans un trou d'engagement s'étendant axialement (14a, 15a) et ménagé dans la pièce d'engagement correspondante (14, 15).

9. Un assemblage de freins conforme à l'une quelconque des revendications 1 à 8, dans lequel la susdite première pièce d'engagement (14) fait partie intégrante de l'axe de support (1).

10. Un assemblage de freins conforme à l'une quelconque des revendications 1 à 8, dans lequel la susdite première pièce d'engagement (14) est séparée de l'axe de support (1).

## Patentansprüche

1. Zangenbremsanordnung für Fahrräder, die folgendes aufweist : einen ersten und einen zweiten Bremshebel, die jeweils Naben haben, die axial hintereinander so auf einer Tragachse drehbar befestigt sind, daß die Bremshebel schwenkbar sind, so daß die Bremsen aufeinander zu und voneinander weg bewegbar sind, wobei die Bremshebel miteinander in Eingriff kommen, um eine Schwenkbewegung der Bremsen voneinander weg zu begrenzen, und wobei die Naben jeweils Ringräume bilden ; sowie ein Federsystem, das die Bremsen in einer Schwenkbewegung voneinander weg drückt, wobei das Federsystem eine erste Schraubenfeder, die in dem Ringraum des ersten Bremshebels aufgenommen ist und die mit einem Ende mit der jeweiligen Nabe in Eingriff steht, und eine zweite Schraubenfeder aufweist, die in dem Ringraum des zweiten Bremshebels aufgenommen ist und die mit einem Ende mit der jeweiligen Nabe in Eingriff steht, dadurch gekennzeichnet, daß jeder der Ringräume (4a, 5a) sich axial nach außen öffnet ; daß ein erstes Eingriffsteil (14) axial außerhalb des ersten Bremshebels (2) auf der Tragachse (1) so befestigt ist, daß es deren Nabe zugewandt ist, wobei das erste Eingriffsteil mit dem anderen Ende (8b) der ersten Schraubenfeder (8) in Eingriff bringbar ist ; und daß ein zweites Eingriffsteil (15) axial außerhalb des zweiten Bremshebels (3) lösbar auf der Tragachse montiert ist, so daß es deren Nabe (5) zugewandt ist, wobei das zweite Eingriffsteil relativ zur Tragachse drehbar befestigt ist, um in einer vorgegebenen Position mit dem anderen Ende (9b) der zweiten Schraubenfeder (9) in Eingriff zu kommen.

2. Bremsanordnung nach Anspruch 1, wobei die Tragachse (1) einen nicht-kreisförmigen Bereich (1b) hat und das zweite Eingriffsteil (15) als scheibenförmige Platte mit einer nicht-kreisförmigen Mittelöffnung (15b) zum unverdrehbaren Aufsetzen auf den nicht-kreisförmigen Bereich der Tragachse ausgebildet ist.

3. Bremsanordnung nach Anspruch 1, wobei die Tragachse (1) einen außenverzahnten Bereich (1b') hat und das zweite Eingriffsteil (15) als scheibenförmige Platte (15) mit einer innenverzahnten Mittelöffnung (15b') zum unverdrehbaren Aufsetzen in einer ausgewählten Drehstellung auf den außenverzahnten Bereich der Tragachse ausgebildet ist.

4. Bremsanordnung nach Anspruch 2 oder 3, wobei das zweite Eingriffsteil (15) axial in seiner Position durch eine Sicherungseinrichtung (16a, 16b) gehalten wird, die in einer Position axial außerhalb des zweiten Eingriffsteiles auf die Tragachse (1) aufgeschraubt ist.

5. Bremsanordnung nach Anspruch 4, wobei die Sicherungseinrichtung eine doppelte Sicherungsmutter (16a, 16b) aufweist.

6. Bremsanordnung nach einem der Ansprüche 1 bis 5, wobei ein ringförmiges Dichtelement (18) zwischen jeder Nabe (4, 5) und dem jeweiligen ersten bzw. zweiten Eingriffsteil (14, 15) dazwischengesetzt ist.

7. Bremsanordnung nach einem der Ansprüche 1 bis 6, wobei eine Sicherungsscheibe (17) zwischen den Naben (4, 5) dazwischengesetzt ist.

8. Bremsanordnung nach einem der Ansprüche 1 bis 7, wobei das eine Ende (8a, 9a) jeder Schraubenfeder (8, 9) sich in axialer Richtung erstreckt zum Einsetzen in eine axial verlaufende Eingriffsbohrung (4b, 5b) einer entsprechenden Nabe (4, 5) und wobei das andere Ende (8b, 9b) jeder Schraubenfeder sich ebenfalls in axialer Richtung erstreckt zum Einsetzen in eine axial verlaufende Eingriffsbohrung (14a, 15a) eines entsprechenden Eingriffsteiles (14, 15).

9. Bremsanordnung nach einem der Ansprüche 1 bis 8, wobei das erste Eingriffsteil (14) integral mit der Tragachse (1) ausgebildet ist.

10. Bremsanordnung nach einem der Ansprüche 1 bis 8, wobei das erste Eingriffsteil (14) getrennt von der Tragachse (1) ist.

# Fig. 1

# Fig. 2

# Fig. 3

## Fig.4a

## Fig.4b

## Fig.4c

# Fig. 5